# EUROPEAN PATENT SPECIFICATION

(11) **EP 1 374 690 B1**
(45) Date of publication and mention of the grant of the patent: **14.05.2008**
(21) Application number: 03007924.8
(22) Date of filing: 08.04.2003
(51) Int. Cl.: A23F 5/24

(54) **Preparation of an aqueous coffee extract with a long shelf life**
Verfahren zur Herstellung eines lagerstabilen wässrigen Kaffee-Extraktes
Procédé de préparation d'un extrait de café aqueux stable au stockage

(30) Priority: 26.06.2002 IT VR20020070
(43) Date of publication of application: 02.01.2004
(73) Proprietor: Procaffe'Spa, 32100 Belluno (IT)
(72) Inventor: Davanzo, Mauro, 32100 Belluno (IT); Brini, Roberto, 32100 Belluno (IT)
(74) Representative: Reniero, Cirillo Silvano

(56) References cited:
- EP-A- 0 403 825
- WO-A-00/04789
- WO-A-01/11981
- WO-A-98/27818
- US-A- 5 914 149
- US-A- 5 993 877
- US-A- 6 056 989
- US-B1- 6 319 537
- DATABASE WPI Section Ch, Week 199637 Derwent Publications Ltd., London, GB; Class D13, AN 1996-365478 XP002256556 & JP 08 173043 A (UNICAFE KK), 9 July 1996 (1996-07-09)
- DATABASE WPI Section Ch, Week 199026 Derwent Publications Ltd., London, GB; Class D13, AN 1990-196678 XP002256557 & JP 02 128675 A (YUKIJIRUSHI SHOKUHI), 17 May 1990 (1990-05-17)

## Description

The present invention concerns a method of providing a stable long-life liquid coffee extract by means of water.

As it is well known, more or less diluted coffee extracts can be produced, which are designed to be used as drinks or as ingredients for products in the food industry.

Many of such extracts are produced by different methods, i.e. through extraction directly from roasted coffee powder (e. g. for obtaining Espresso Coffee, or Filter Coffee, or the like), or solubilisation of dried soluble coffee extracts, or dilution of more concentrated aqueous coffee extracts. Generally speaking, an aqueous coffee extract is unstable over time and becomes increasingly acidic at room temperature over the first storage period (usually one - one month and a half), until it reaches a stable acidity plateau level at pH 4.6- 4.8 on average. The 4.8 pH value is commonly considered in literature as the lower limit for taste acceptability.

In fact at a pH lower than 4.8, a coffee extract becomes undrinkable and looses most of its organoleptic taste properties. A clear, convincing and conclusive explanation has yet to be given, for such a pH fall over time. Apparently, it might be due to a slow hydrolysis reaction of some compounds (generally, esters and lactones - see EP-0 861 596 (1984)) which are produced during the roasting process of the seed, or to the oxidation of carbonyl group-containing compounds with oxygen to give carboxylic acids, or even to the Maillard reaction occuring among polysaccharides and proteins, which are still available after the roasting process.

This occurs both in a conventional coffee drink, and in concentrated liquid aqueous coffee extracts.

Several attempts have been made to reduce such a natural decay. European Patent EP-0 893 065 discloses how to limit pH fall by increasing the coffee extract concentration until a value equal to or greater than 55% by weight of soluble solids is reached. Even by acting in this way, however, it is imperative to store the extract at -18°C in order to maintain the pH of the product above 4.9. This fact makes it very difficult to distribute for sale a product of this type, since it would be necessary constantly to ensure the cold chain. Moreover, the consumption of such a product must be immediate, once the product is brought to room temperature, so as to avoid a sudden fall in the pH value.

An alternative way to modify the pH value in coffee extracts is suggested in the U.S.A. Patent US-2 712 501 (1955) that discloses how to modify an acidic coffee extract to enhance the coffee flavour by adding weak or strong bases until a pH value of about 5.2 is reached, or by adding a base to the extraction water, to obtain a less acidic coffee extract. This patent, however, does not disclose nor suggests a long term stabilization of the pH value, and thus of the acidity of the coffee extract over time.

European Patent EP-0 861 596 discloses long term storage of liquid coffee by means of alkali, thereby increasing the rate of salification of carboxylic acid precursors that might be responsible for pH fall, and subsequent neutralization of any base excess in the coffee extract to reach a pH value of about 4.7 - 5.3. This procedure, however, has the disadvantage of adding a large amount of alkaline metal salts and subsequently also an acid in order to return to a pH value of a natural coffee extract. The presence of some carboxylic or inorganic anions described in the patent can cause radical changes in the organoleptic properties of the product. For instance, an even limited increase in the total concentration of citrate anion in its various protonated species tends to modify the taste at the palate (even if the citrate is one of the natural compounds to be found in the coffee), whereas an even limited increase in phosphate anion concentration in its various protonated species tends to give a marked salty taste (although the phosphate is one of the natural compounds present in natural coffee).

U.S.A. Patent US-6 319 537 B1 discloses a solution to the problem of best aroma preservation in the coffee extract over time by keeping the aroma separated from coffee extract. It is necessary, however, to keep the coffee extract and the aroma frozen or at reduced temperature for optimum aroma preservation. It is also suggested that basic compounds must be added to reduce formation of acids during storage, or the coffee extract is caused to pass through an ionic exchange column, or alkali has to be sold together with coffee extract designed to be added to coffee extract for preparing a coffee drink just before use.

Examples in US-6 319 537 deal with the use of sodium hydroxide, that has the disadvantage, however, of substantially increasing the concentration of sodium cation in the coffee drink, whereas sodium cation is naturally almost absent in coffee extract. Moreover, sodium is an element preferably to be avoided from the nutritional point of view. In addition, no indication is to be found as to maximum temperature at which the product has be stored. This detail is decisive as the product could be stored and used in places where room temperature is relatively high.

US-5 993 877 discloses a method of manufacturing a coffee extract, in which a strong alkaline salt and weak acid are added, and no quick-cooling after pasteurisation is carried out, whereby deterioration of flavour and precipitation are prevented during a relatively short shelf-life.

WO-00 14 789 discloses a ready to serve coffee product providing a beverage or a topping containing 2-5% of soluble coffee solids and processed in a controlled atmosphere.

US-5 914 149 discloses a transparent liquid food, e.g. a coffee containing a sucrose fatty acid ester, whereby no cloudiness or precipitation occur during shelf-life.

Another way of buffering pH fall in a coffee extract is to add milk proteins to it. As is clearly apparent to a coffee expert, in this way the resulting coffee drink loses its main organoleptic properties while taking a taste similar to that of a "cappuccino drink".

The main object of the present invention is to provide a method of obtaining an aqueous liquid coffee extract including any concentration of soluble solids and having a very prolonged stability both from the microbiological and organoleptic point of view (at least four months) at room temperature, the coffee extract being subsequently diluted according to the requirements to obtain a coffee drink.

Another object of this invention is to provide a method of obtaining an aqueous acidity-controlled coffee extract suitable for self-stabilizing towards pH values which are typical for fresh natural coffee extract in the shortest possible time, without requiring further chemical treatments.

Another object of this invention is to define optimum conditions for a heat treatment of an aqueous coffee extract, in view of preserving the organoleptic natural properties thereof, while taking full advantage of the heat treatment from the biological point of view.

Another object of this invention is to bring, in as shortest as possible time, the pH level of an aqueous acidity-controlled coffee extract to pH values which are typical for an aqueous natural coffee extract in order to obtain a coffee extract product that can be sold on the market with no substantial sensorial variations.

Another object of this invention is that the said method of obtaining an aqueous coffee extract is relatively simple to be carried out at competitive costs.

These and further objects, which will better appear hereinbelow, are achieved by a method according to the present invention, that comprises the following operating sequence:
- preparation of coffee extract, through an extraction process at a temperature in the range from 60 to 120°C;
- adjusting acidity (pH) of said coffee extract to a level higher than a predetermined level;
- heat treating said coffee extract;
- transferring said coffee extract thus pasteurised into a container;
- sealing and storing said container at ambient temperature,
   characterised in that;
   said predetermined level of acidity before heat treating is equal to or higher than pH 8;
- said adjusting acidity of said coffee extract is carried out immediately after said preparation to such an extent that a predetermined steady acidity level is reached, and in that said coffee extract thus adjusted in acidity is head treated at temperatures ranging from 80 to 140°C and then cooled from 100 to 20°C in four minutes to quickly reach a temperature of 10 to 30°C by means of a cooling and temperature control system.

The method according to the present invention makes it possible to adjust or correct the acidity of an aqueous coffee extract in order to prolong the shelf life thereof, with no further back-correction with acids after at least one base has been added, thereby promoting standard reactions that occur mainly during the first period of the coffee extract storage in view of obtaining a typical pH value of an aqueous natural coffee extract.

A pH correction can be obtained with any base, although it is preferable in accordance with the present invention to use potassium hydroxide, since, when added to an acidic solution of aqueous coffee extract, it neutralizes the hydrogen ion while water is formed and potassium ion freed. Potassium ion, however, is already naturally present in excess in a coffee extract. In this way, the organoleptic properties and the natural composition of the coffee are not altered.

For pH value correction also strong anionic resins suitable for food contact can be used, e. g. in order to obtain the same pH value of coffee extract as that reached by means of a base. WO 00/69274 discloses the use of Dowen 22 resin. Other resins are available on the market, e. g. Lewatit MP 600.

The present invention is further described below with reference to specific examples thereof.

A coffee extract was obtained with the various preparation methods already well known in the state of the art. As is known, high temperatures for the extraction means (water) can lead to higher yields, but with the disadvantage of a much more higher tendency to increase the acidity both in the first instants after the extraction process, and in the long run. The best temperatures for the extraction process are in the range from 60° to 120°C, preferably between 80° and 100°C.

To the coffee extract thus obtained an aqueous solution of KOH (more or less concentrated) was added. Care was taken not to use a too diluted solution of KOH which would excessively dilute the coffee extract. It is also possible, however, to use drops in a commercially available form or small particles or fine dust of KOH, so that the coffee extract is not diluted provided that good mixing is carried out to prevent the added alkaline salt from precipitating and formation of zones with an excess of base.

It is convenient, in the case in which concentrate solutions of KOH, or pure solid KOH are used to equip a blending or mixing apparatus, of any suitable kind with a suitable cooling system and a temperature control system, since the reaction of KOH with aqueous solutions is highly exothermic. Suitable safety devices were provided for the personnel handling KOH. In the present example the concentration of the used aqueous solution of KOH was from 5% w/w to 40% w/w. The amount of KOH in moles or in w/w percentage on dry substance basis of the coffee extract depended only upon the correction level to be achieved and thus on the desired pH value at an acidity plateau level in the long run.

One of the main advantages achievable with this invention is that by obtaining a specific coffee extract from a given blend of roasted coffee and a series of pH fall curves concerning coffee extracts whose acidity has been corrected by using increasing amounts of KOH, it is possible to establish the pH plateau level of the extract with reasonable accuracy.

In general, to obtain a correction suitable for reaching a pH of range of 5.75-6.25 an amount of 1N KOH aqueous solution in the range of 40-60 ml per kg of coffee extract (with a concentration of about 18-20% w/w on dry basis) is to be added, and to obtain a correction suitable for reaching a range of 6.25-6.75 an amount of 1N KOH aqueous solution in the range of 60-80 ml per kg of coffee extract (with a concentration around 18-20% w/w on dry basis) is added.

### Example 1

1 kg of an aqueous coffee extract with pH of 5.20 was corrected with 76.4 ml of KOH 1N and pasteurised in an autoclave, i. e. by
- heating: from 80°C to 100°C in 9 minutes, while keeping the temperature at 100°C for 1 minute;
- cooling: from 100°C to 20°C in 4 minutes, by submersion in ice to immediately reach room temperature.

An extract was obtained with a concentration of 18.0% w/w (on dry substance basis) and a pH value of 6.75. Some aseptic samples were packed and stored at different temperatures (15°C, 28°C, 37°C, 50°C). The pH reached a value below 6.0 within 5 days at 28°C, and a value of about 5.7 in 10 days, typical of a Robusta coffee, just after extraction thereof.

It was also observed that acidity changed in one month to a pH of 5.0 - 5.2, typical of a 100% Arabica coffee. The limit value of 4.8 was reached in four months while keeping the sample always at 28°C. These data were obtained from a shelf life study carried out by the Food Science Department of the Udine University.

The autoclave treatment is a strong treatment and does not allow the product to be exposed to short, but heavy, heat treatments, as is the case with a pasteurisation treatment through a plate or tubular exchanger. Prolonged heat treatments can cause a cutting effect on the polysaccharides chains. It has been shown in the state of the art that interactions of short chain sugars in a coffee extract can be responsible for a high increase in the content of volatile acids that results in speeding up ageing processes. It is therefore preferable to use other technologies of pasteurisation, e.g. pasteurisation on plates or tube bundle.

### Example 2

500 kg of aqueous coffee extract, with a pH of 5.33, were corrected with 7.5 kg of an aqueous solution of KOH (30% w/w) to reach a pH of 6.55, and then pasteurised by means of an industrial plate exchanger pasteurisator in the following conditions: holding temperature 105°C, holding time 60 seconds. The treatment was effective:
Microbiological analysis before treatment

| Total bacterial count | 700 CFU/g |
|---|---|
| Yeasts | 30 CFU/g |
| Moulds | 10 CFU/g |
| Spore-forming | 300 CFU/g |

Microbiological analysis after treatment

| Total bacterial count | <10 CFU/g |
|---|---|
| Yeasts | 0 CFU/g |
| Moulds | 0 CFU/g |
| Spore-forming | <10 CFU/g |

The final product had a pH of 6.3 and a concentration of 18.0% w/w (on dry substance basis) and it was aseptically packed and stored at room temperature (between of 15°C and 32°C). Aseptic packaging was performed under modified atmosphere to prevent oxidation processes during long storage at room temperature.

The product was monitored to detect pH drop according to the curve shown below.

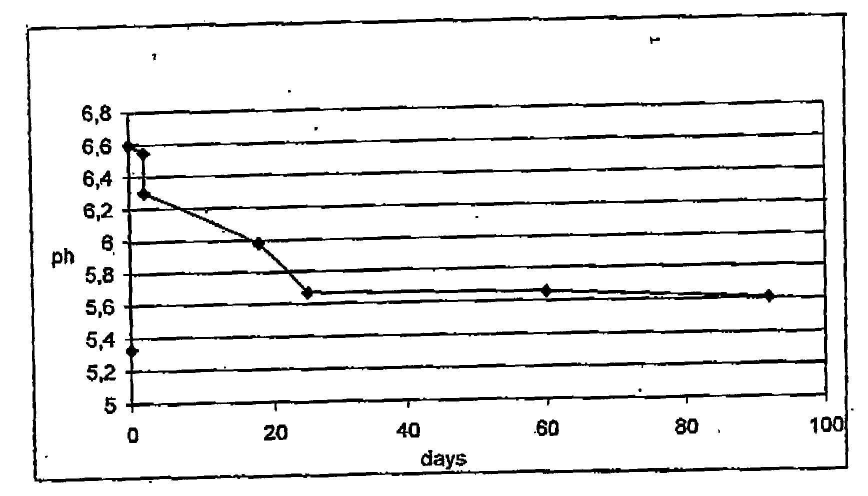

As it will be seen, in this case a less aggressive heat treatment caused as a consequence stabilization at a higher pH plateau level than that obtained with autoclave treatment in Example 1.

The best sterilization conditions were carefully studied to obtain the best preservation of the organoleptic properties of coffee extract and reach an adequate and safe system of microorganism removal at the same time. The test was performed by directly inoculating the extract with sufficient bacterial amounts of heat resistant aerobic spore-forming *Bacillus Cereus* to reach at least 5x10⁴ cell./ml of micro organism in the extract. Two techniques were considered and adopted to remove such a bacterial contamination: heat pasteurisation and UV treatment. UV irradiation onto a thin layer (to promote a higher penetration) did not give encouraging results, due to specific wavelength absorption of the organic molecules in the coffee extract.

The heat treatment most effective from the microbiological point of view and at the same time absolutely ineffective on the organoleptic properties of the coffee extract requires: quick preheating, holding time from 10 to 60 seconds at a temperature from 100°C to 140°C, quick cooling to reach a final temperature of 10-30°C. Such a heat treatment is also sufficient and necessary to speed up the return of the pH value of the aqueous coffee extract corrected with a base to 6.0 pH value. The samples were microbiologically monitored over 90 days.

Another technology to reduce the bacterial presence is also available on the market, which, however, does not guarantee effectiveness on possible spore organisms, i. e. high pressure treatment. The most serious difficulties for adopting this system so far are very high plant costs and low productivity. Such a system can be used, however, to carry out microbiological stabilization of coffee extract .

Coffee extract can be treated with three different acidity correctors: KOH (S2), Na₂HPO₄ (S5) and Na₃C₆H₅O₇ (trisodium citrate).

It will be noted that a strong base can be used, e.g. potassium hydroxide, or sodium hydroxide, or alkaline metal salts of weak polyprotic carboxylic acids, such as citric acid, or alkaline metal salts of phosphoric acid.

In general, for a correction necessary to achieve a pH in the range of 6.0-7.0 an amount of Na₂HPO₄ .12H₂O of 13.9-15.99 per kg of coffee extract (with a concentration around 18-20% w/w on dry basis) must be added and for a correction aimed at achieving a pH in the range of 5.5-6.5 an amount of Na₃C₆H₅O₇-12H₂O of 51.8-61.4 g per kg of coffee extract (with a concentration around 18-20% w/w on dry basis) must be added.

In accordance with the present invention the use of KOH is preferable to other acidity connectors, e.g. Na₂HPO₄ and Na₃C₆H₅O₂ in that it does not affect the organoleptic properties of the coffee extract. Moreover, it does not cause significant variations in the natural coffee extract composition.

The use of a strong anionic resin makes it possible to achieve the same result as with KOH addition, with no change in the natural content of potassium ion in the coffee extract, although some characteristic carbanions are taken out of the extract aqueous solution. During trials, this did not result in any evident organoleptic modification of the final product. A modulation of the coffee extract correction is simply obtained by varying the load of coffee extract inside an ionic exchange column, i. e. in physical terms by varying the time of contact and thus ionic exchange between the resin and the coffee extract.

The invention above described is susceptible of numerous modifications and variations within its protection scope as defined by the claims.

## Claims

1. A method of providing an aqueous coffee extract comprising the following steps in sequence:
- preparation of a coffee extract through an extraction process at a temperature in the range from 60 to 120°C;
- adjusting acidity (pH) of said coffee extract to a level higher than a predetermined level;
- heat treating said coffee extract;
- transferring said coffee extract thus heat treated into a container; .
- sealing and storing said container at ambient temperatures;
**characterized in that**
- said predetermined level of acidity before heat treating is equal to or higher than pH 4.8;
- said adjusting acidity of said coffee extract is carried out immediately after said preparation to such an extent that a predetermined steady acidity level is reached, and **in that** said coffee extract thus adjusted in acidity is heat treated at temperatures ranging from 80 to 140°C and then cooled from 100 to 20°C in four minutes to quickly reach a temperature of 10 to 30 °C by means of a cooling and temperature control system.

2. A method according to claim 1, **characterized in that** said acidity level is adjusted by adding at least one base thereto in a proportion of 40 to 60 or 60 to 80 ml per kg of coffee extract.

3. A method according to claim 2, **characterized in that** said at least one base is selected from the group comprising in proportion of 40 to 60 or 60 to 80 ml KOH 1N per kg of coffee extract with a concentration of about 18-20% w/w on dry basis, Na₂HPO₄.12H₂O (13.9 - 15.9 g per kg of extract with a concentration of about 18-20% w/w on dry basis), and sodium citrate (Na₃C₆H₅ O₇.12H₂O) (51.8 - 61.4 g per kg of extract with a concentration of about 18-20 % w/w on dry basis).

4. A method according to claim 1 **characterized in that** said acidity level is adjusted by treating said coffee extract by means of an anion exchange resin.

5. A method according to any preceding claim, **characterized in that** said heat treatment comprises a holding time from 10 to 60 seconds at a temperature of 100 to 140°C.

## Patentansprüche

1. Verfahren zum Bereitstellen eines wässrigen Kaffeeextrakts, umfassend die folgenden Schritte in der Reihenfolge:
- Herstellen eines kaffeeextrakts durch ein Extraktionsverfahren bei einer Temperatur im Bereich von 60 bis 120°C;
- Einstellen des Säuregehalts (pH) des Kaffeeextrakts auf ein höheres Level als ein ein vorher festgeiegtes Level;
- Wärmebehandeln des Kaffeeextrakts;
- Oberführen des wärmebehandelten Kaffeeextrakts in einen Behälter;
- Verschließen und Lagern des Behälters bei Umgebungstemperatur,
**dadurch gekennzeichnet, dass**
- das vorher festgelegte Level des Säuregehalts vor der Wärmehehandlung gleich oder höher als pH 4,8 ist;
- das Einstellen des Säuregehalts des Kaffeeextrakts unmittelbar nach dessen Herstellung derart ausgefürt wird, dass ein vorher festgelegter, gleichbleichender Säuregehalt erreicht wird, und dass der so im Säuregehalt eingestellte Kaffeeextrakt bei Temperaturen von 80 bis 140°C wärmebehandelt und dann mittels eines Kühl- und Temperaturregelungsystems in 4 Minuten von 100 auf 20°C gekühlt wird, um rasch eine Temperatur von 10 bis 30°C zu erreichen.

2. Verfahren gemäß Anspruch 1, **dadurch gekennzeichnet, dass** der Säuregehaltlevel durch Hinzufügen mindestens einer Base in einem Anteil von 40 bis 60 oder 60 bis 80 ml pro kg Kaffeeextrakt eingestellt wird.

3. Verfahren gemäß Anspruch 2, **dadurch gekennzeichnet, dass** die mindestens eine Base ausgewählt ist aus der Gruppe, umfassend in einem Anteil von 40 bis 60 oder 60 bis 80 ml KOH 1N pro kg Kaffeeextrakt mit einer Konzentration von etwa 18-20 % w/w Trockenmasse, Na₂HPO₄·l2H₂O (13,9-15,9 g pro kg Extrakt mit einer Konzentration von etwa 18-20 % w/w Trockenmasse) und Nutriumcitrat (Na₃C₆H₅O₇,12H₂O) (51,8-61,4 g pro kg Extrakt mit einer Konzentration von etwa 18-20 % w/w Trockenmasse).

4. Verfahren gemäß Anspruch 1, **dadurch gekennzeichnet, dass** der Säuregehaltlevel durch Behandeln des Kaffeeextrakts mit einem Anionenaustauscherharz eingestellt wird.

5. Verfahren gemäß einem der vorhergehenden Ansprüche, **dadurch gekennzeichnet, dass** die Wärmebehandlung eine Haltexlauer von 10 bis 60 Sekunden bei einer Temperatur von 100 bis 140°C umfasst.

## Revendications

1. Un procédé de préparation d'un extrait de café aqueux comprenant les étapes successives suivantes:
- préparation d'un extrait de café par un procédé d'extraction à une température comprise dans le domaine compris entre 60°C et 120°C;
- ajustement de l'acidité (pH) dudit extrait de café à un niveau supérieur à un niveau prédéterminé;
- traitement thermique dudit extrait de café;
- transfert dudit extrait de café ayant subi ce traitement thermique dans un conteneur;
- scellage et stockage dudit conteneur à température ambiante
**caractérisé en ce que**:
ledit niveau d'acidité prédeterminé préalablement au traitement thermique est égal à ou supérieur a une valeur de pH 4,8;
ledit ajustement de l'acidité dudit extrait de café est mis en oeuvre immédiatement après ladite préparation dans une mesure telle qu'un niveau d'acidité constant predéterminé soit atteint, et **en ce que** ledit extrait de café dont l'acidité a été ainsi ajustée est soumis à un traitement thermique à une température comprise entre 80°C et 140°C et est ensuite refroidi d'une température de 100 de 20°C en 4 minutes pour rapidement atteindre une température de 10 à 30°C par refroidissement et un système de contrôle de la température.

2. Un procédé selon la revendication 1, **caractérisé en ce que** ledit niveau d'acidité est ajusté par addition d'au moins une base en une proportion de 40 à 60 ou 60 à 80 ml par kg d'extrait de café.

3. Un procédé selon la revendication 2, **caractérisé en ce que** ladite au moins une base est choisi dans le groupe comprenant, en proportions, de 40 à 60 ou 60 à 80 ml de KOH 1N par kg d'extrait de café, avec une concentration d'environ 18-20% pds/pds exprimé sur une base sèche, du Na₂HPO₄.l2H₂O (13,9 - 15,9 g/par kg d'extrait avec une concentration d'environ 18-20% pds/pds exprimée sur une base sèche) et du citrate de sodium (Na₃C₆H₅O₇,12H₂O) (51,8 - 61,4 g par kg d'extrait avec une concentration d'environ 18 à 20% pds/pds exprimée sur une base sèche).

4. Un procédé selon la revendication 1, **caractérisé en ce que** ledit niveau d'acidité est ajusté par traitement dudit extrait de café au moyen d'une résine échangeuse d'anion.

5. Un procédé selon selon la revendication 1, **caractérise en ce que** ledit traitement thermique implique une durée de maintien à une température de 100°C à 140°C pendant une durée de 10 à 60 secondes.
